# EUROPÄISCHE PATENTSCHRIFT

(11) **EP 0 338 425 B1**
(45) Veröffentlichungstag und Bekanntmachung des Hinweises auf die Patenterteilung: **03.03.1993**
(21) Anmeldenummer: 89106597.1
(22) Anmeldetag: 13.04.1989
(51) Int. Cl.: C08G 65/48, C08K 5/34

(54) **Modifizierte Polyphenylenether**
Modified polyphenylene ethers
Polyphénylèneéthers modifiés

(30) Priorität: 19.04.1988 DE 3812947
(43) Veröffentlichungstag der Anmeldung: 25.10.1989
(73) Patentinhaber: BASF Aktiengesellschaft, 67063 Ludwigshafen (DE)
(72) Erfinder: Muehlbach, Klaus, Dr., D-6148 Heppenheim (DE); De Araujo, Marco Aurelio, Dr., D-7800 Freiburg (DE); Stadler, Reimund, Dr., D-7801 Vorstaetten (DE)

(56) Entgegenhaltungen:
- EP-A- 0 222 246
- WO-A-86/02086
- WO-A-87/00540
- US-A- 3 966 530

## Beschreibung

Die Erfindung betrifft modifizierte Polyphenylenether aus
A) einem Polyphenylenether als Basispolymerem und
B) einem Modifizierungsmittel, das als Molekülteil eine 1,2,4-Triazolin-3,5-diongruppe enthält, oder das 1,2,4-Triazolin-3,5-dion ist.

Die Modifizierung von Polymeren ist allgemein bekannt. So können an Dienpolymerisate, die olefinische ungesättigte Doppelbindungen enthalten, Triazolin-dione addiert werden (G.B. Butler, Ind. Chem. Prod. Res. Dev. 19, 512 bis 528 (1980) und US-A 3 966 530.

Es hat nicht an Versuchen gefehlt, Polyphenylenether, die im allgemeinen frei von olefinischen Doppelbindungen sind, durch Pfropfung mit olefinisch ungesättigten Verbindungen zur Verbesserung von anwendungstechnischen Eigenschaften zu modifizieren. So können nach üblichen Methoden z.B. ungesättigte Carbonsäuren (vgl. EP-A 25 200), Maleinsäurehalbester (EP-A 254 048), Fumarsäure (EP-A 223 116) oder β-Lactone (DE-A 32 38 930) auf Polyphenylenether pfropfpolymerisiert werden. In WO-A 87/00540 werden Polyphenylenether mit Modifizierungsmitteln, die im Molekül sowohl eine C-C-Doppel- oder Dreifachbindung als auch säurefunktionelle Gruppen oder Amino- oder Hydroxylgruppen tragen, funktionalisiert. Die beschriebenen Modifizierungen führen jedoch meist zu stark verfärbten Produkten. Gemäß WO-A 86/02086 werden Derivate von Carbonsäuren oder deren Halogenide oder Anhydride, die eine weitere säurefunktionelle Gruppe oder eine Amino- oder Hydroxylgruppe tragen, als Modifiziermittel eingesetzt. Aus DE-A 35 40 119 war es bekannt, Polyphenylenether mit Maleinimiden zu pfropfen.

Die bekannten modifizierten Polyphenylenether haben jedoch den Nachteil, daß im allgemeinen so drastische Reaktionsbedingungen eingestellt werden müssen, daß der Polyphenylenether geschädigt wird und keine hellen Produkte hergestellt werden können oder daß nur unzureichende Modifizierungsgrade erreicht werden.

Aufgabe der vorliegenden Erfindung war es daher, modifizierte Polyphenylenether aufzufinden, die eine helle Eigenfarbe und einen hohen Modifizierungsgrad aufweisen.

Demgemäß wurden die eingangs definierten modifizierten Polyphenylenether gefunden.

Weiterhin wurde ein Verfahren zur Herstellung dieser modifizierten Polyphenylenether gefunden.

Bevorzugte Ausführungen sind den Unteransprüchen zu entnehmen.

Unter "Modifizierung" soll eine durch die Umsetzung der Komponente A mit der Komponente B hervorgerufene Veränderung des Polyphenylenethers A verstanden werden.

Als Basispolymere A eignen sich bekannte Polyphenylenether, die nach üblichen Verfahren aus in ortho-Position durch Alkylgruppen disubstituierten Phenolen durch oxidative Kupplung hergestellt werden (vgl. US-Patente 3 661 848, 3 219 625, 3 378 505, 3 306 874, 3 306 875 und 3 639 656). Geeignete Polyphenylenether sind beispielsweise Poly(2,6-diethyl-1,4-phenylen)ether, Poly(2-methyl-6-ethyl-1,4-phenylen)ether, Poly(2-methyl-6-propyl-1,4-phenylen)ether, Poly(2,6-dipropyl-1,4-phenylen)ether, Poly(2-ethyl-6-propyl-1,4-phenylen)ether oder Copolymere, wie solche, die 2,3,6-Trimethylphenol enthalten, außerdem Polymermischungen. Bevorzugt ist Poly(2,6-dimethyl-1,4-phenylen)ether. Die in einem solchen Verfahren hergestellten Polyphenylenether weisen im allgemeinen Molekulargewichte von 10.000 bis 90.000, insbesondere 20.000 bis 80.000, bestimmt nach der in "Macromolecular Synthesis" 1 (1977), Seite 83, angegebenen Methode, auf. Der erfindungsgemäße modifizierte Polyphenylenether enthält im allgemeinen 50 bis 99,95, insbesondere 75 bis 99,9 Gew.% Polyphenylenether.

Bei der Komponente B kann es sich um 1,2,4-Triazolin-3,5-dion selbst handeln. Es kommen auch in 4-Stellung substituierte 1,2,4-Triazolin-3,5-dione der Formel I in Frage

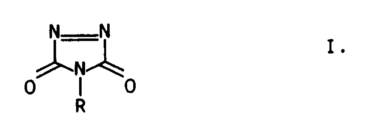

Hierin kann R stehen für einen Alkyl-, Cycloalkyl-, Aryl-, Aralkyl- oder Alkylarylrest mit bis zu 25 C-Atomen, einen 5- bis 8-gliedrigen Heterocyclus mit Stickstoff, Sauerstoff oder Schwefel als Heteroatom oder für NR¹R², wobei R¹ und R² C₁-C₄-Alkylgruppen und insbesondere Wasserstoff sind.

R kann gegebenenfalls auch einen Alkenyl- oder Alkinylrest mit 2 bis 25 C-Atomen darstellen.

Ganz allgemein wird als R ein Rest bevorzugt, der bis zu 15 C-Atome enthält.

Beispiele für Alkylreste sind Methyl, Ethyl, Propyl, Butyl, Pentyl, Hexyl, Heptyl, Octyl, Nonyl, Decyl, Undecyl, Dodecyl, Neopentyl, 3,5,5-Trimethylhexyl, 3-Methylhexyl, 2-Ethylhexyl und 2,5,5-Trimethylhexyl.

Ein Beispiel für einen Cycloalkylrest ist Cyclohexyl.

Beispiele für Aralkylreste sind Benzyl und Phenethyl.

Unsubstituierte Arylreste sind beispielsweise Phenyl und Naphthyl. Substituierte Arylreste sind Alkylaryl-, Cycloalkylaryl-, arylsubstituierte Alkylaryl- und arylsubstituierte Aryl-Reste.

Beispiele für Alkylarylreste sind o-, p- und m-Tolyl, 2,6- und 2,4-Dimethylphenyl, Trimethylphenyl, o-, p- und m-Isopropylphenyl, Nonylphenyl, p-tert-Butylphenyl, 2,4-Diisopropylphenyl und Triisopropylphenyl.

Ein Beispiel für einen Cycloalkarylrest ist o-Cyclohexylphenyl. Beispiele für arylsubstituierte Alkylarylreste sind p-Benzylphenyl und p-Phenethylphenyl.

Ein Beispiel für ein arylsubstituiertes Aryl ist Diphenyl.

Bevorzugte Reste sind Phenyl, o-, m-, p-Tolyl und 2,6-Dimethylphenyl, 2,7-Diisopropylphenyl und Triisopropylphenyl.

Besonders bevorzugt werden 4-Methyl- und 4-Phenyl-1,2,4-triazolin-3,5-dion.

Der Rest R kann seinerseits durch ein oder mehrere funktionelle Gruppen substituiert sein. Beispiele für geeignete funktionelle Gruppen sind Halogen-, Nitril-, Ether-, Nitro-, phenolische OH-, Carbonsäureester-, Carbonsäurehalogenid-, Carbonsäureamid-, Säureanhydrid-, Imid-, Lactam-, Epoxy-, Urethan-, Oxazolin-, Carbonyl-, Thioether-, Sulfonsäureester-, Phosphat- und Aminogruppen; geeignet sind auch Salze von Carboxylgruppen. Beispielhaft seien der 4-Hydroxy-3-nitrophenyl- und der 4-Carboxymethylphenylrest genannt.

Daneben ist es auch möglich, als Rest R UV- oder Hitze-Stabilisatoren, wie Derivate des 2,2,4,4-Tetramethylpiperidins oder Benzotriazol (z.B. 2-(2-Hydroxy-5-methylphenyl)-benzotriazol, Antioxidantien wie sterisch gehinderte Phenole (z.B. 2,6-Di-tert.-butylphenol oder 2,6-Di-tert.-butyl-para-Kresol), Thioether oder Phosphite (z.B. Tri(2,4-di-tert.-butylphenyl)phosphit), Flammschutzmittel wie halogenhaltige Flammschutzmittel (z.B. Derivate des Tetrabrombisphenol A, des Tetrabromphthalimids bzw. -säureanhydrids, bromierte Biphenylether oder bromierte Phenole), phosphorhaltige Flammschutzmittel wie Phosphate und Phosphinoxide (z.B. Triphenylphosphat oder -phosphinoxid) oder Derivate des Melamins (z.B. Melamincyanurat), Farbstoffe wie Antrachinonfarbstoffe, Antistatika wie Salze von Carbonsäuren oder Sulfonsäuren (z.B. langkettige aliphatische Sulfonsäuresalze), quartäre Ammoniumsalze, oligomere oder polymere Ether des Ethylenglykols bzw. Propylenglykols, mesogene Seitengruppen, wie sie in DE-A 36 31 841 beschrieben sind (z.B. Alkoxy-4′-methoxybiphenyl), oder einen anderen Wirkstoff einzusetzen, um diese über die 1,2,4-Triazolin-3,5-dion-Gruppe mit dem Polyphenylenether zu verknüpfen.

Die Substituenten R müssen, was sich allerdings von selbst versteht, so beschaffen sein, daß sie die Modifizierungsreaktion nicht verhindern.

Weiterhin kann die Modifizierung auch mit mehr als eine 1,2,4-Triazolin-3,5-dion-Gruppe tragenden Molekülen erfolgen. Dies führt im allgemeinen zu verzweigten bzw. vernetzten Polymeren. Bevorzugt sind Komponenten der Struktur II 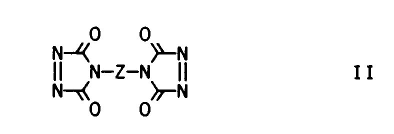
wobei Z ein Brückenglied ist. Als Z gut geeignet ist -(CH₂)ₙ-mit n = 1 bis 8, 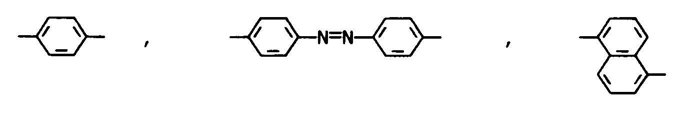
und bevorzugt 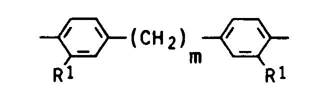
mit m = 2 bis 8, bervorzugt 1
und R¹ = H oder OCH₃.

Die Komponente B ist allgemein bekannt. Sie kann beispielsweise gemäß DE-A 32 44 657 und DE-A 27 04 330 bzw. J.C. Stickler, W.H. Pirkle, J. Org. Chem., 31, 3444-45 (1966) bzw. J.A. Moore, R. Muth, R. Sorace, J. Org. Chem. 39, 3799 (1974) hergestellt werden.

Die Komponente B ist im modifizierten Polyphenylenether im allgemeinen in Mengen von 0,05 bis 50, bevorzugt 0,1 bis 25 Gew.% eingebaut.

Die Umsetzung der Komponenten A und B erfolgt entweder in Substanz, d.h. in der Schmelze von A oder vorzugsweise in Lösung bzw. einer Suspension von A in einem Lösungsmittel für die Komponente B. Man sorgt im allgemeinen durch Rühren für eine gute Durchmischung der Reaktionspartner.

Für die Umsetzung besonders geeignete Lösungsmittel sind solche, die sowohl A als auch B lösen, ohne die Modifizierung zu stören. Geeignete Lösungsmittel sind beispielsweise aromatische und chlorierte Kohlenwasserstoffe, Tetrahydrofuran, Ethylacetat oder Dimethylformamid.

Die Umsetzung kann in einem weiten Temperaturbereich von -50°C bis zum Siedepunkt des entsprechenden Lösungsmittels, vorzugsweise zwischen -20°C und +80°C durchgeführt werden.

Die Modifizierung des Polyphenylenethers kann auch direkt im Anschluß an die Herstellung des Polyphenylenethers vorgenommen werden. Hierzu wird die den Polyphenylenether enthaltende Polymerisationslösung mit der Komponente B versetzt und nach abgeschlossener Umsetzung aufgearbeitet, um den modifizierten Polyphenylenether zu isolieren.

Der modifizierte Polyphenylenether kann in bekannter Weise mit üblichen Zusatzstoffen und Verarbeitungshilfsmitteln abgemischt sein.

Als Zusatzstoffe seien genannt Hitze- und Lichtstabilisatoren, Gleit- und Entformungsmittel und Färbemittel wie Farbstoffe und Pigmente in üblichen Mengen. Weitere Zusatzstoffe sind Verstärkungsmittel wie Glasfasern, Asbestfasern, Kohlenstoff-Fasern und/oder Füllstoffe wie Gipsfasern, synthetische Calciumsilikate, Kaolin, calciniertes Kaolin, Wollastonit, Talkum, Kreide, ferner Flammschutzmittel wie Phosphorverbindungen, z.B. Phosphate, Phosphorsäureester, Phosphorigsäureester, Phosphinsäureester, Phosphonigsäureester oder organische Phosphinoxide.

Die erfindungsgemäßen modifizierten Polyphenylenether zeichnen sich durch gute mechanische Eigenschaften gekoppelt mit einer hellen Eigenfarbe und hohem Modifizierungsgrad aus.

Die modifizierten Polyphenylenether können ohne Schwierigkeit durch thermoplastische Verformungsverfahren wie Spritzguß oder Extrusion verarbeitet und als Formteile oder zur Beschichtung von Oberflächen eingesetzt werden.

### Beispiele

### Beispiel 1

5 kg Poly-(2,6-dimethyl-1,4-phenylen)ether mit einer relativen Viskosität von 0,5 dl/g, gemessen in 1 gew.%iger Lösung in Chloroform bei 25°C, (PPE) wurden in 30 kg Ethylbenzol gelöst und mit 250 g 4-Phenyl-1,2,4-triazolin-3,5-dion, gelöst in 2,5 l Methylenchlorid, bei 30°C versetzt und 4 h gerührt. Nach dieser Zeit hatte die anfangs tiefrote Reaktionslösung eine blaßgelbe Farbe angenommen. Das Polymere wurde durch Fällen in Methanol isoliert.

### Beispiel 2

Es wurde wie in Beispiel 1 verfahren, jedoch wurden 5 kg PPE mit 1 kg 4-Methyl-1,2,4-triazolin-3,5-dion versetzt.

### Vergleichsbeispiel I (gemäß der Lehre von WO-A 87/00540)

9,7 kg Poly-(2,6-dimethyl-1,4-phenylen)ether mit einer relativen Viskosität von 0,50 dl/g, gemessen in 1 gew.%iger Chloroformlösung bei 25°C, und 0,3 kg Maleinsäureanhydrid wurden in einem Zweischneckenextruder bei 270°C miteinander umgesetzt und anschließend in einer Entgasungszone bei 280°C bei vermindertem Druck entgast. Die mittlere Verweilzeit im Extruder betrug 3 Minuten. Die Schmelze wurde zur Kühlung durch ein Wasserbad geleitet, granuliert und getrocknet. Das Granulat war in Toluol löslich.

### Vergleichsbeispiel II (gemäß der Lehre der DE-A 35 40 119)

Es wurde entsprechend dem Vergleichsbeispiel I verfahren, jedoch wurden 9,5 kg PPE mit 0,5 kg N-Phenylmaleinimid umgesetzt.

### Vergleichsbeispiel III (gemäß der Lehre der WO-A 86/02086)

5 kg des PPE aus Vergleichsbeispiel I werden in 30 kg Ethylbenzol gelöst und anschließend mit 500 g Triethylamin und 250 g Trimellitsäureanhyrdridsäurechlorid bei 90°C unter Rühren versetzt. Nach 3 Stunden wird filtriert und das Polymere durch Fällen in niedrig siedendem Petrolether isoliert.

### Ergebnisse

Die modifizierten Polyphenylenether wurden bei 265°C zu Folien mit einer Dicke von 2 mm verpreßt und die Farbe der Folien visuell verglichen und benotet (1: farblos; 6: sehr dunkel). Die Proben der Vergleichsbeispiele I und II wurden zuvor in Toluol gelöst und in Methanol gefällt. Der Gehalt (Gew.%) des Modifizierungsmittels nach Umfällen wurde IR-spektroskopisch nach Eichung mit geeigneten Modellsubstanzen bzw. bei den erfindungsgemäßen Beispielen elementaranalytisch durch Stickstoffbestimmung ermittelt.

| Beispiel | Farbe | Gehalt an Modifizierungsmittel Gew.% | Modifizierungsgrad* |
|---|---|---|---|
| 1 | 2-3 | 4,5 | 0,95 |
| 2 | 2-3 | 15,2 | 0,91 |
| Vgl.-Beispiel I | 4 | 1,3 | 0,43 |
| Vgl.-Beispiel II | 4 | 2, 1 | 0,42 |
| Vgl.-Beispiel III | 2-3 | 1,9 | 0,40 |

| | | | |
|---|---|---|---|
| * Modifizierungsgrad = Gehalt an Modifiziermittel [Gew.%] durch Einsatzmenge an Modifizierungsmittel [Gew.%] | | | |

### Beispiel 3

Es wurde wie in Beispiel 1 gearbeitet, jedoch wurde 4-Phenyl-1,2,4-triazolin-3,5-dion durch 4-(4-Hydroxy-3-nitro-phenyl)-1,2,4-triazolin-3,5-dion ersetzt. Der Gehalt an Modifizierungsmittel im Polymeren beträgt 4,2 Gew.%.

### Beispiel 4

Es wurde wie in Beispiel 1 verfahren, jedoch wurde 4-Phenyl-1,2,4-triazolin-3,5-dion durch 4,4'-Methylenbis(1,4-phenylen-)di-1,2,4-triazolin-3,5-dion ersetzt. Man erhält ein vernetztes Produkt mit einem Gelgehalt von 82 %.

### Beispiel 5

5 kg PPE wurden wie in Beispiel 1 beschrieben mit 200 g 4-(4-Carboxymethylphenyl)-1,2,4-triazolin-3,5-dion modifiziert. Der Gehalt an polymergebundenem Modifizierungsmittel beträgt 3,8 %.

Die Herstellung der in 4-Stellung substituierten 1,2,4-Triazolin-3,5-dione erfolgt durch Oxidation der entsprechenden 1,2,4-Triazolidin-3,5-dione mit N₂O₄ gemäß dem Beispiel 2 der DE-A 27 04 330.

## Patentansprüche

1. Modifizierte Polyphenylenether aus
A) einem Polyphenylenether als Basispolymerem und
B) einem Modifizierungsmittel, das als Molekülteil eine 1,2,4-Triazolin-3,5-diongruppe enthält, oder das 1,2,4-Triazolin-3,5-dion ist.

2. Modifizierte Polyphenylenether nach Anspruch 1, in denen B als Molekülteil eine 1,2,4-Triazolin-3,5-diongruppe enthält.

3. Modifizierte Polyphenylenether nach mindestens einem der Ansprüche 1 und 2 aus
50 bis 99,95 Gew.% der Komponente A und
0,05 bis 50 Gew.% der Komponente B.

4. Modifizierte Polyphenylenether nach Anspruch 1, in denen B 1,2,4-Triazolin-3,5-dion ist.

5. Modifizierte Polyphenylenether nach Anspruch 1, in denen B 4-Phenyl-1,2,4-triazolin-3,5-dion ist.

6. Modifizierte Polyphenylenether nach Anspruch 1, in denen B 4-Methyl-1,2,4-triazolin-3,5-dion ist.

7. Modifizierte Polyphenylenether nach Anspruch 1, in denen B 4-(4-Hydroxy-3-nitro-phenyl)-1,2,4-triazolin-3,5-dion ist.

8. Modifizierte Polyphenylenether nach Anspruch 1, in denen B 4,4′-Methylenbis(1,4-phenylen)-di-1,2,4-triazolin-3,5-dion ist.

9. Modifizierte Polyphenylenether nach Anspruch 1, in denen B 4-(4-Carboxymethylphenyl)-1,2,4-triazolin-3,5-dion ist.

10. Verfahren zur Modifizierung von Polyphenylenethern gemäß mindestens einem der Ansprüche 1 bis 9 durch Umsetzen eines Polyphenylenethers mit einem Modifizierungsmittel, dadurch gekennzeichnet, daß das Modifizierungsmittel als Molekülteil eine 1,2,4-Triazin-3,5-diongruppe enthält oder 1,2,4-Triazin-3,5-dion ist.

## Claims

1. Modified polyphenylene ether comprising
A) Polyphenyl ether as a base polymer and
B) a modifier which contains 1,2,4-Triazolin-3, 5-dion group asmolecularmoiety which is 1,2,4-Traiazolin-3,5 dion.

2. Modified polyphenylene ether as claimed in Claim 1, where B contains 1,2,4-Triazolin-3.5 - dion group asmolecularmoiety.

3. A modified polyphenylene ether as claimed in one or both claims 1 and 2, comprising
from 50 to 99.95 % per weight of component A and
from 50 to 99.95 % per weight of component A and
from 0.05 to 50 % of component B and

4. A modified polyphenylene ether as claimed in Claim 1, wherein B is 1, 2, 4-Triazolin-3, 5 dion.

5. A modified polyphenylene ether as claimed in Claim 1, wherein B is 4-phenyl-1.2,4-Triazolin-3,5-dion.

6. A modified polyphenylene ether as claimed in Claim 1, wherein B is 4-Methyl-1-1,2,4-triazolin-3,5-dion.

7. A modified polyphenylene ether as claimed in Claim 1, wherein B is 4-(4-Hydroxy-3-nitrophenyl)-1,2,4-triazolin-3,5-dion.

8. A modified polyphenylene ether as claimed in Claim 1, wherein B is 4,4'-Methylenbis-(1,4-phenyl-di-1,2,4-triazolin-3, 5-dion.

9. A modified polyphenylene ether as claimed in Claim 1, wherein B is 4-(4-Carboxymethylpheny)-1,2,4-triazolin-3,5-dion.

10. The process for modifying a polyphenylene ether has claimed in one or more of the claims 1 to 9 by reacting a polyphenylene ether with a modifier, wherein the modifier contains 1,2,4-Triazin-3,5-dion group asymolecularamoeity or is 1,2,4-Triazin-3,5-dion.

## Revendications

1. Polyphénylèneéthers modifiés, constitués de
A) un polyphénylèneéther à titre de polymère de base et
B) un agent de modification ou modificateur, qui contient un radical 1,2,4-triazoline-3,5-dione à titre de composant moléculaire, ou qui est la 1,2,4-triazoline-3,5-dione.

2. Polyphénylèneéthers modifiés selon la revendication 1, dans lesquels a contient un radical 1,2,4-triazoline-3,5-dione à titre de composant moléculaire.

3. Polyphénylèneéthers modifiés, selon au moins l'une des revendications 1 et 2, constitués de
50 à 99,95% en poids du composant A et
0,05 à 50% en poids du composant B.

4. Polyphénylèneéthers modifiés selon la revendication 1 dans lesquels B est la 1,2,5-triazoline-3,5-dione.

5. Polyphénylèneéthers modifiés selon la revendication 1, dans lequel B est la 4-phényl-1,2,4-triazoline-3,5-dione.

6. Polyphénylèneéthers modifiés selon la revendication 1 dans lesquels B est la 4-méthyl-1,2,4-triazoline-3,5-dione.

7. Polyphénylènéthers modifiés selon la revendication 1 dans lesquels B est la 4-(4-hydroxy-3-nitro-phényl)-1,2,4-triazoline-3,5-dione.

8. Polyphénylèneéthers modifiés selon la revendication 1 dans lesquels B est la 4,4'-méthylènebis(1,4-phénylène)-di-1,2,4-triazoline-3,5-dione.

9. Polyphénylèneéthers modifiés selon la revendication 1 dans lesquels B est la 4-(4-carboxyméthylphényl)-1,2,4-triazoline-3,5-dione.

10. Procédé de modification de polyphénylèneéthers selon au moins l'une des revendications 1 à 9, par la réaction d'un polyphénylèneéther avec un agent de modification, caractérisé en ce que l'agent de modification contient un radical 1,2,4-triazone-3,5-dione à titre de composant moléculaire, ou est la 1,2,4-triazine-3,5-dione.
